# DEMANDE DE BREVET EUROPEEN

(11) **EP 0 930 204 A1**
(43) Date de publication de la demande: **21.07.1999**
(21) Numéro de dépôt: 98810024.4
(22) Date de dépôt: 20.01.1998
(51) Int. Cl.: B60S 1/04

(54) **Dispositif pour la protection des balais d'essuie-glace**

(71) Demandeur: Vaccari, Aldo, 1860 Aigle (CH)
(72) Inventeur: Vaccari, Aldo, 1860 Aigle (CH)

(57) **Abrégé**

Dispositif pour la protection du caoutchouc des balais d'essuie-glace constitué par un support comportant une plaquette métallique *(1)* qui se fixe directement sur le bras du balai d'essuie-glace et qui est munie d'une béquille escamotable *(4)* permettant d'éloigner le balai d'essuie-glace par rapport au pare-brise durant une inactivité prolongée de ceux-ci.

## Description

La présente invention concerne un dispositif pour la protection des balais d'essuie-glace durant une non-utilisation prolongée de ceux-ci.

Lors d'une non-utilisation prolongée des balais d'essuie-glace, le caoutchouc de ceux-ci se détériore à cause de leur écrasement contre le pare-brise dû à la pression exercée par le bras d'essuie-glace. En outre, par temps sec ou en cas de gel, il arrive que le caoutchouc des balais d'essuie-glace adhère au pare-brise.

Le dispositif selon l'invention défini à la revendication 1 permet de remédier à cet inconvénient. Ce dispositif est une amélioration notable du modèle manuel décrit dans le brevet N° GB 2'281'506. Le support du dispositif est muni d'une béquille escamotable qui permet d'éloigner légèrement le bras du balai d'essuie-glace vis-à-vis du pare-brise en prenant appui sur celui-ci. Lors de l'enclenchement de l'essuie-glace par le conducteur, un ressort de rappel permet le repli de la béquille permettant ainsi au balai d'essuie-glace de reprendre sa position initiale contre le pare-brise. L'éloignement des balais s'effectue de manière manuelle en réarmant le support.

L'invention sera mieux comprise et ses avantages apparaîtront plus clairement à la lecture de la description d'une forme d'exécution, donnée à titre d'exemple, en regard des dessins sur lesquels :

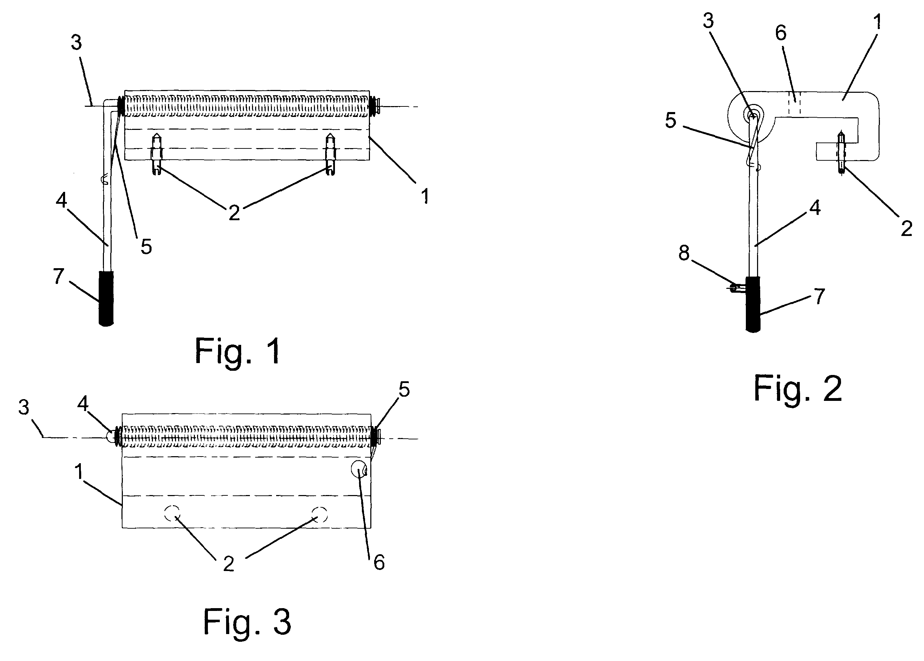

- La figure 1 : représente le dispositif vu de face.
- La figure 2 : représente le dispositif vu de profil.
- La figure 3 : représente le dispositif vu de dessus.

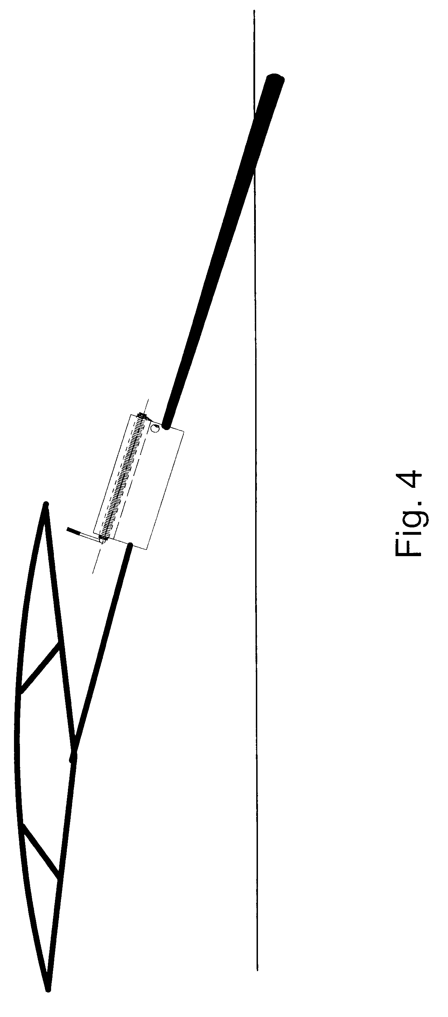

- La figure 4 : représente l'application du dispositif, essuie-glace au repos.

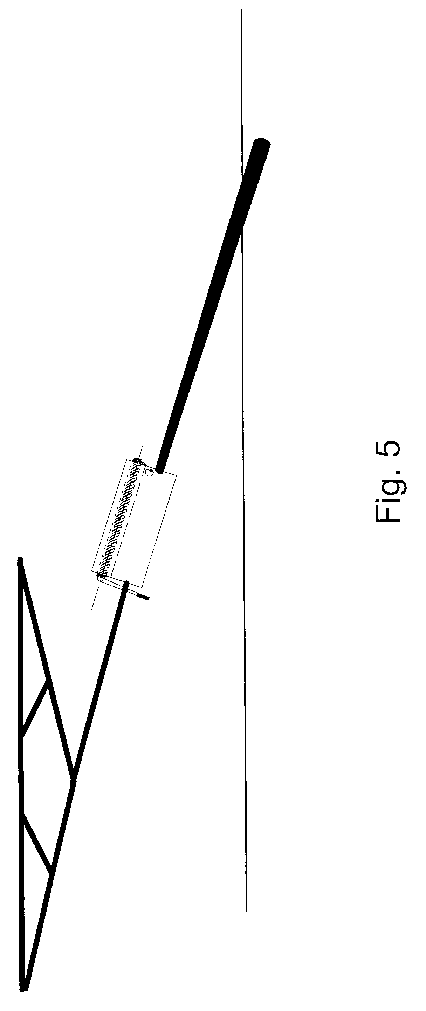

- La figure 5 : représente l'application du dispositif, essuie-glace en action.

En référence à ces dessins, le dispositif comporte un support constitué par une plaquette métallique *(1)* qui se fixe directement sur le bras du balai d'essuie-glace.

L'autre extrémité de la plaquette comporte une articulation *(3)* dans laquelle pivote la béquille escamotable *(4)*. Cette béquille est maintenue en position de repos au moyen d'un ressort de rappel *(5)*. La plaquette est munie d'un orifice *(6)* permettant de maintenir l'extrémité du ressort de rappel.

La béquille est munie à son extrémité d'un manchon coulissant en matière plastique *(7)* qui permet à l'utilisateur d'ajuster la distance d'éloignement du balai d'essuie-glace vis-à-vis du pare-brise. Une vis de fixation *(8)* permet le blocage de ce manchon à la position désirée.

A titre d'exemple non limitatif, la plaquette métallique (1) aura des dimensions de l'ordre de 30mm x 25mm x 10mm et la béquille escamotable (4) une longueur de l'ordre de 60mm.

## Revendications

1. Dispositif pour la protection des balais d'essuie-glace caractérisé en ce qu'il comporte un support dont une extrémité *(1)* qui se fixe directement sur le bras du balai d'essuie-glace et dont l'autre extrémité comporte une articulation *(3)* dans laquelle pivote une béquille escamotable *(4)* qui est maintenue en position de repos au moyen d'un ressort de rappel *(5)* et qui est munie à son extrémité d'un manchon coulissant *(7)* qui permet à l'utilisateur d'ajuster la distance d'éloignement du balai d'essuie-glace vis-à-vis du pare-brise.

2. Dispositif selon la revendication 1, caractérisé en ce que le support est constitué par une plaquette métallique et le manchon coulissant est en caoutchouc ou en matière plastique.

3. Dispositif selon les revendications 1 et 2 caractérisé en ce qu'il est fixé sur le bras du balai d'essuie-glace au moyen de deux vis de serrage (2).

4. Dispositif selon les revendications 1 et 2 caractérisé en ce qu'il est fixé sur le bras du balai d'essuie-glace par un clip.
